(19) Europäisches Patentamt
European Patent Office
Office européen des brevets

(11) Publication number: **0 103 782**
**A1**

# (12) EUROPEAN PATENT APPLICATION

(21) Application number: 83108435.5

(22) Date of filing: 27.04.82

(51) Int. Cl.³: C 07 C 69/587
C 07 C 67/38

(30) Priority: 27.04.81 US 258140
27.04.81 US 258145
27.04.81 US 258146

(43) Date of publication of application:
28.03.84 Bulletin 84/13

(84) Designated Contracting States:
BE DE FR GB IT NL

(60) Publication number of the earlier application in accordance with Art. 76 EPC: 0 063 818

(71) Applicant: NATIONAL DISTILLERS AND CHEMICAL CORPORATION
99 Park Avenue
New York, NY 10016(US)

(72) Inventor: Hanes, Ronnie Michael
5817 Mt. Vernon Drive
Milford Ohio(US)

(72) Inventor: Scheben, John Andrew
107 Locust Street
Erlanger Kentucky(US)

(72) Inventor: Goetz, Richard Walter
805 Cedarhill Drive
Cincinnati Ohio(US)

(74) Representative: Patentanwälte Grünecker, Dr. Kinkeldey, Dr. Stockmair, Dr. Schumann, Jakob, Dr. Bezold, Meister, Hilgers, Dr. Meyer-Plath
Maximilianstrasse 58
D-8000 München 22(DE)

## (54) Process for the preparation of alkyl nonadienoate esters.

(57) A process for the reaction of 1,3-butadiene, alkanol and carbon monoxide in the presence of a palladium-containing Group VB tertiary donor ligand catalyst composition which comprises carrying out said reaction in the presence of a catalyst-promoting amount of alkoxide ion to provide an alkyl nonadienoate ester.

EP 0 103 782 A1

# PROCESS FOR THE PREPARATION OF ALKYL NONADIENOATE ESTERS

This invention relates to processes for the preparation of esters and, more particularly, to the one-step preparation of alkyl nonadienoate esters by the reaction of 1,3-butadiene, carbon monoxide and alkanol in the presence of a palladium-containing catalyst.

The reaction of monoolefins and conjugated diolefins with carbon monoxide and alkanol to provide an alkyl ester is well known. Numerous catalysts have been used or proposed for this synthesis including bis(triphenylphosphine) palladium chloride as in U.S. Patent No. 3,437,676; a palladium complex such as palladium diacetate with an aromatic phosphine such as triphenylphosphine as in U.S. Patent No. 3,530,155, Japanese Patent No. 72/37,934, Tsuji, et al., *Tetrahedron* 28, 3721 (1972) and Billups, et al., *J.C.S. Chem. Comm.*, 18 (5), 1067 (1971); palladous chloride, cupric chloride and triphenylphosphine as in U.S. Patent No. 3,530,168; palladium halide in molten tetrahydrocarbylammonium or phosphonium trihalostannate (II) or trihalogermanate (II) salts as in U.S. Patent Nos. 3,657,368, 3,832,391, 3,968,133, 4,038,208 and 4,042,530; palladium salt complexed with a phosphine ligand such as palladium dichloride bis(triphenylphosphine) in the presence of a tin cocatalyst or promoter such as stannous chloride dihydrate as in U.S. Patent No. 3,700,706; the palladium complex $[PdCl_2(\text{triphenylphosphine})_2](C_6H_4Cl_2)_x$ as in U.S. Patent No. 3,723,486; compounds of the formula $(L)_2MXY$ wherein L is a phosphinite, phosphonite, thiophosphinite, or dithiophosphonite ligand, M is palladium and X and Y are chloride, bromide, iodide, various substituted and unsubstituted alkyls and aryls, cyano, $SnCl_3$, isocyanate,

BAD ORIGINAL

thiocyanate, aroyl and lower perfluoroalkyl groups as in U.S. Patent Nos. 3,776,929 and 3,906,615; zerovalent palladium phosphine complex with or without added catalyst activator (additional phosphine) as in U.S. Patent No. 3,780,074 and, ligand-stabilized platinum (II) catalyst complexed with excess Group IV-B metal halide, the ligand being selected from Groups V-B and VI-B of the Periodic Table as in U.S. Patent No. 3,819,669. U.S. Patent Nos. 4,124,617 and 4,172,087 each describes a one-step reaction of a conjugated aliphatic diene, alkanol and carbon monoxide in a nitrogen-containing tertiary base and in the presence of a palladium salt/tertiary phosphorus-containing donor ligand as catalyst to provide an unsaturated aliphatic ester derivative thereof. Other catalyst compositions which have been disclosed for use in the aforedescribed synthesis include a combination of palladium diacetate, palladium chloride/triphenylphosphine complex and additional triphenylphosphine as in Japanese Patent No. 73/25,169; and, palladium diacetate and amino-substituted phosphine as in Japanese Patent No. 76/149,206.

It ~~is also within the scope of the present invention and~~ has now surprisingly been discovered that in the reaction of 1,3-butadiene, alkanol and carbon monoxide in the presence of a catalyst composition containing a palladium component and a Group VB ligand forming component to provide an alkyl nonadienoate ester, the addition to the reaction medium of alkoxide ion, preformed or prepared *in situ*, significantly increases the yield of ester reaction product. Thus, for example, in the catalytic reaction of 1,3-butadiene, methanol and carbon monoxide to provide methyl nonadienoate according to the equation

$$2CH_2{=}CHCH{=}CH_2 + CO + CH_3OH \xrightarrow{\text{catalyst}} CH_2{=}CH(CH_2)_3CH{=}CHCH_2COOCH_3$$

the presence of methoxide ion in the reaction medium significanly increases the yield of this commercially important ester, for example, by a factor of from two to three times compared to the yield provided by the same reaction in the absence of methoxide ion.

BAD ORIGINAL

Broadly stated, this aspect of the process of the present invention comprises reacting 1,3-butadiene with an aliphatic alkanol of from 1 to about 12 carbon atoms in the presence of a catalytically effective amount of a catalyst composition comprising a member of the group consisting of zerovalent palldium, a palladium-containing material which provides zerovalent palladium under reaction conditions and palladium (II) salt, and a Group VB tertiary donor ligand and a catalyst promoting amount of alkoxide ion to provide an alkyl nonadienoate ester.

The alkyl nonadienoate esters produced by the process of this invention can be readily reduced by known and conventional techniques, e.g., catalytic hydrogenation, to the corresponding alkyl nonanoate esters which are useful in the formulation of synthetic lubricants.

The 1,3-butadiene employed in the present invention can vary in its degree of purity with industrial grades of this diolefin being preferred for reasons of economy and ready availability.

Alkanols which are suitably co-reacted with butadiene include methanol, ethanol, propanol, isopropanol, n-butanol, sec-butanol, tert-butanol, hexanol, decanol, dodecanol, and the like.

As stated above, the palladium component of the catalyst complex herein can be zero-valent palladium, a palladium-containing composition which will provide zerovalent palladium, i.e., will undergo reduction, under the conditions of the reaction and/or a palladium (II) salt, with or without the additional presence of a reducing agent such as alkali metal alkoxide, alkali metal acetate and/or alkali metal borohydride. Among such palladium-containing compositions are included palladium (II) acetate, palladium (II) formate, palladium (II) octanoate, palladium (II) propionate, palladium acetylacetonate, palladium (II) bis (π-allyl), palladium (II) nitrate, palladium sulfate, and palladium (II) halides

BAD ORIGINAL

such as palladium chloride and palladium bromide. Molar ratios of palladium to 1,3-butadiene which can be used herein can vary widely, e.g., from about 1:25 to about 1:20,000, with from about 1:2,000 to about 1:8,000 being preferred.

Examples of strong ligands which are useful herein, together with the productivities and the palladium precipitate rating (a measure of catalyst decomposition) of each, are given below in Table 1 as follows:

Among the Group VB tertiary donor ligands which can be complexed with the foregoing palladium-containing materials are the trivalent compounds of nitrogen, phosphorus, arsenic and antimony such as $P(C_6H_5)_3$, $As(C_6H_5)_3$, $Sb(C_6H_5)_3$, $P(CH_3)_2C_6H_5$, $P(iso\text{-}C_4H_9)_3$, $P(p\text{-}CH_3.C_6H_4)_3$, $P(c\text{-}C_6H_{11})_3$, $P(OC_6H_5)_3$, $P(p\text{-}CH_3.C_6H_4)(C_6H_5)_2$, $P(C_6H_5)_2[3,4\text{-}(CH_3O)_2C_6H_3]$, $P(CH_3)_3$, $P(C_2H_5)_3$, $P(n\text{-}C_4H_9)_3$, $P(C_8H_{17})_3$, $P(o\text{-}CH_3.C_6H_4)_3$, $(C_6H_5)_2As(CH_2)_2As(C_6H_5)_2$, $P(p\text{-}Cl.C_6H_4)_3$ and $P(C_8H_{17})_3$. Especially preferred are phosphine ligands of $pK_a > 6.0$. such as triethylphosphine, tri-n-butyl phosphine, tricyclohexylphosphine, tri-n-octylphosphine and triphenyl phosphine. Typical catalyst complexes include $Pd(OAc)_2$-$2P(OPh)_3$; $Pd(OAc)_2$-$2P(OEt)_3$; $Pd(OAc)_2$-$2P(p\text{-}Cl.C_6H_4)_3$; $Pd(OAc)_2$-$2PPh_3$; $Pd(OAc)_2$-$2P(p\text{-}CH_3.C_6H_4)_3$; $Pd(OAc)_2$-$2P(n\text{-}Bu)_3$; $Pd(OAc)_2$-$2P(c\text{-}C_6H_{11})_3$; $Pd(OAc)_2$-$2PEt_3$; $Pd(OAc)_2$-$P(o\text{-}CH_3.C_6H_4)_3$; $Pd(OAc)_2$-DIARS; $Pd(PPh_3)_2(OAc)_2$; $Pd(NO_3)_2$-$2P(n\text{-}Bu)_3$; $Pd[PPh_2(3,4\text{-}(CH_3O)_2\text{-}C_6H_3)]_2Cl_2$-10NaOAc; $PdCl_2$-$2P(n\text{-}Bu)_3$-10NaOAc; $Pd(Acac)_2$-$2P(n\text{-}Bu)_3$, and $Pd(OAc)_2$-$2P(C_6H_{11})_3$.

BAD ORIGINAL

For optimum yields and maximum catalyst stability, at least one molar equivalent of Group VB tertiary donor ligand should be present per gram atom of palladium although greater amounts of donor ligand than this can also be used. The amount of palladium catalyst employed in the reaction is not overly critical, subject, of course, to there being a catalytically effective amount present. From 50 to 400 moles of 1,3-butadiene per mole of palladium metal catalyst are advantageously utilized.

It is also within the scope of the present invention to incorporate alkoxide ion in the reaction medium as a catalyst promoter and to further improve the stability of the palladium catalyst, either preformed or formed in situ by merely dissolving alkali metal or other source of chemically reactive alkali metal, e.g., alkali metal borohydride, in the selected alkanol, ROH. Alkoxide ion is formed quantitatively according to the reaction (illustrated for sodium metal which is preferred):

$$ROH + Na \longrightarrow RO^- + Na^+ + 1/2H_2$$

The alkanol chosen for conversion to the corresponding alkoxide can be any alkanol heretofore described as a reactant and advantageously is identical with said reactant. In such case, the alkoxide ion is preferably generated in situ by the addition of an amount of alkali metal calculated to provide the desired amount of ion. The amount of alkoxide ion which can be used herein can vary over fairly wide limits. Thus, for example, from about 0.1 to about 10 molar equivalents of alkoxide ion per gram atoms of palladium, and preferably, from about 0.5 to about 5 molar equivalents of alkoxide ion per gram atom of palladium, can be used with good results.

The reaction herein requires at least a stoichiometric quantity of carbon monoxide which can be supplied as a relatively pure gas or in admixture with up to 30 volume percent of an inert gas such as nitrogen, argon, neon, and the like.

BAD ORIGINAL

Optimum choice of reaction conditions will depend in part upon the nature and concentration of the reactants, the catalyst and the optional alkoxide. Temperatures of from about 30° to about 150°, pressures on the order of from about 100 psig to about 3,000 psig and reaction times of up to 20 hours are suitable. It has been observed herein that employing alkoxide promotor, yield and selectivity of the telomerization/carbonylation reaction for the desired ester increases with increasing carbon monoxide pressure within the range of from about 400 psig to about 900 psig at 90°C. At pressures in excess of 900 psig, selectivity for the desired ester has been observed to increase while yield decreases. Although catalyst stability can be somewhat of a problem in the regime below about 900 psig and at an operating temperature of about 90°C, it has been found to be reasonably good above this level of pressure. In one procedure which can be used to obtain the catalyst herein, all reaction ingredients with the exception of the 1,3-butadiene, i.e., palladium-containing component, strong ligand, weak ligand and alkanol, are added to a reactor, the reactor is purged and pressurized to 500 psig carbon monoxide pressure and heated to 90°C for 1 to 8 hours. Thereafter, the reactor is cooled to ambient temperature, vented and 1,3-butadiene added with the reaction being conducted as described above and as illustrated in the following examples.

BAD ORIGINAL

Of the following examples, Example 1 illustrates the use of a known palladium-organophosphorus ligand catalyst complex and Example 41 illustrates the use of substantially similar catalyst but containing alkoxide ion in accordance with this invention.

EXAMPLE 1

This example demonstrates the use of the catalyst system and conditions disclosed in Japanese Patent 72/37,934.

To a 71 cc glass-lined Parr autoclave were charged 0.0058 g (0.026 mmoles) palladium acetate, 0.0335 g (0.128 mmoles) triphenylphosphine, 10 ml methanol and 5 g butadiene. The autoclave was pressurized to 1000 psig with CO and shaken at 110°C for 10 hours. Analysis of the product solution by GLC (gas-liquid-chromatography) showed the presence of 0.58 mmoles methyl nonadienoate. A large amount of palladium decomposition was observed.

EXAMPLE 2

This example demonstrates the advantage of the addition of sodium methoxide to the catalyst system of Example 1 in accordance with the present invention.

To a 71 cc glass-lined Parr autoclave were charged 0.0054 g (0.024 mmoles) palladium acetate, 0.0302 g (0.115 mmoles) triphenylphosphine, 0. 0209 g (0.39 mmoles) sodium methoxide, 10 ml methanol and 5 g butadiene. The autoclave was pressurized to 1000 psig with CO and shaken at 110°C for 10 hours. Analysis of the product solution by GLC showed the presence of 1.28 mmoles methyl nonadienoate. A large amount of palladium decomposition was observed.

BAD ORIGINAL

EXAMPLE 3

To a 300cc glass lined autoclave were charged 0.023 g $Pd(OAc)_2$, 0.0808 g $PPh_3$ and 30 ml methanol. The autoclave was then pressurized to 500 psi with CO and heated at 75°C. for 2 hours. After cooling to room temperature, the autoclave was vented and 0.1377 g (3.6 mmoles) $NaBH_4$ in 20 ml methanol (chilled in dry ice) was added, followed by 20 g 1,3-butadiene. The autoclave was then pressurized to 500 psig with CO and heated at 75°C. for 15 hours. GLC analysis of the product solution indicated the presence of methyl nonadienoate.

EXAMPLE 4

To a glass-lined 71 ml Parr autoclave were charged 0.0175 g (0.078 mmoles) $Pd(OAc)_2$, 0.1608 g (0.614 mmoles) $PPh_3$ and 5 ml methanol. To the foregoing were added 0.1647 g (4.33 mmoles) $NaBH_4$ in 5 ml of methanol followed by 10 g butadiene. The autoclave was then pressurized to 1500 psig with CO and shaken at 125°C. for 12 hours. At the end of this period, methyl nonadienoate together with a quantity of a dark solid was present in the reactor, indicating some Pd decomposition.

EXAMPLE 5

To a 71 cc glass-lined Parr autoclave were charged 0.0140 g (0.0624 mmoles) $Pd(OAc)_2$, 0.1625 g (0.62 mmoles) $PPh_3$ and 5 ml methanol. To the foregoing were added a solution of 0.1171 g (3.08 mmoles) $NaBH_4$ in 5 ml methanol, followed by 9 g 1,3-butadiene. The autoclave was then pressurized to 400 psig with CO and shaken at 90°C. for 12 hours. Methyl nonadienoate together with a quantity of a dark solid was present in the autoclave.

BAD ORIGINAL

## EXAMPLE 6

To a 71 cc glass-lined Parr autoclave were charged 0.0139 g (0.062 mmoles) $Pd(OAc)_2$, 0.1650 g (0.63 mmoles) $PPh_3$, and 5 ml methanol. To the foregoing were added a solution of 0.1206 g (3.17 mmoles) $NaBH_4$ in 5 ml methanol, followed by 10 g butadiene. The bomb was then pressurized to 700 psig with CO and shaken at 90°C. for 12 hours. At the end of the reaction, methyl nonadienoate together with a small amount of a dark solid was present in the autoclave.

## EXAMPLE 7

To a 71 cc glass-lined Parr autoclave were charged 0.0143 g (0.064 mmoles) $Pd(OAc)_2$, 0.1613 g (0.616 mmoles) $PPh_3$ and 5 ml methanol. To the foregoing were added a solution of 0.1205 g (3.17 mmoles) $NaBH_4$ in 5 ml methanol, followed by 9.5 g butadiene. The autoclave was then pressurized to 900 psig with CO and shaken at 90°C. for 12 hours. At the end of the reaction, methyl nonadienoate together with a quantity of a dark solid was present in the autoclave.

## EXAMPLE 8

To a 71 cc glass lined Parr autoclave were charged 0.0147 g (0.066 mmoles) $Pd(OAc)_2$, 0.1606 g (0.613 mmoles) $PPh_3$ and 5 ml methanol. To this was added 0.1159 g (3.05 mmoles) $NaBH_4$ in 5 ml methanol, followed by 11 g butadiene. The bomb was then pressurized to 1200 psig with CO and shaken at 90°C. for 12 hours. At the end of the reaction, methyl nonadienoate together with a yellow solid was present in the autoclave. A portion of the latter dissolved in toluene provided a white, apparently polymeric substance.

BAD ORIGINAL

## EXAMPLE 9

To a 71 cc glass-lined Parr autoclave were charged 0.0144 g (0.064 mmoles) $Pd(OAc)_2$, 0.1730 g (0.66 mmoles) $PPh_3$. To the foregoing were added 5 ml methanol followed by 0.1185 g (3.12 mmoles) $NaBH_4$ in 5 ml methanol and then by 10 g butadiene. The autoclave was then filled to 1000 psig CO and heated at 90°C. (no shaking) for 12 hours. In addition to methyl nonadienoate, a quantity of a yellow solid was recovered.

## EXAMPLE 10

To a 71 cc glass-lined Parr autoclave were charged 0.0139 g (0.062 mmoles) $Pd(OAc)_2$, 0.1488 g (0.74 mmoles) $PBu_3$ and 5 ml methanol. To the foregoing were charged 0.1197 g (3.15 mmoles) $NaBH_4$ in 5 ml methanol, followed by 6 g butadiene. The autoclave was then pressurized with 1000 psig CO and shaken at 90°C. for 12 hours. In addition to methyl nonadienoate, a quantity of a dark solid was present in the reactor.

BAD ORIGINAL

Claims 1 to 4

1. In a process for the reaction of 1,3-butadiene, alkanol and carbon monoxide in the presence of a palladium-containing Group VB tertiary donor ligand catalyst composition to provide an alkyl nonadienoate ester characterized by carrying out said reaction in the presence of a catalyst-promoting amount of alkoxide ion.

2. The process of Claim 1 wherein the Group VB tertiary donor ligand is a tertiary phosphine having a pKa $> 6.0$.

3. The process of Claim 2 wherein the phosphine is triethylphosphine, tri-n-butyl phosphine, tricyclohexylphosphine, tri-n-octylphosphine and triphenyl phosphine.

4. The process of Claim 3 wherein the alkoxide ion is formed in situ by the reaction of an alkali metal borohydride with an alkanol and is present to the extent of about 0.1 to about 10 molar equivalents of alkoxide ion per gram atom of palladium.

BAD ORIGINAL

0103782

European Patent Office

# EUROPEAN SEARCH REPORT

Application number

EP 83 10 8435

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | US-A-4 124 617 (J.F. KNIFTON) * Column 1, lines 8-35; column 3, lines 6-34; column 3, lines 2-34; columns 15,16, claims 1,2 * --- | 1-3 | C 07 C 69/587<br>C 07 C 67/38 |
| A | GB-A-2 014 136 (TEXACO) * Page 1, lines 7-29; page 2, lines 15-38; page 3, lines 1-18; page 7, claims 1,2 * ----- | 1-3 | |
| | | | TECHNICAL FIELDS SEARCHED (Int. Cl. 3) |
| | | | C 07 C 69/00<br>C 07 C 67/00 |

The present search report has been drawn up for all claims

| Place of search | Date of completion of the search | Examiner |
|---|---|---|
| THE HAGUE | 16-12-1983 | KINZINGER J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document